Europäisches Patentamt

European Patent Office

Office européen des brevets

(19)

(11) Veröffentlichungsnummer: **0 075 134**
**B1**

# (12) EUROPÄISCHE PATENTSCHRIFT

(45) Veröffentlichungstag der Patentschrift:
19.03.86

(21) Anmeldenummer: 82107866.4

(22) Anmeldetag: 26.08.82

(51) Int. Cl.⁴: **A 23 L 1/221**

(54) Verfahren zur Extraktion der Aromastoffe der Vaniliekapsel.

(30) Priorität: 18.09.81 DE 3137230

(43) Veröffentlichungstag der Anmeldung:
30.03.83 Patentblatt 83/13

(45) Bekanntmachung des Hinweises auf die Patenterteilung:
19.03.86 Patentblatt 86/12

(84) Benannte Vertragsstaaten:
AT BE CH DE FR GB IT LI NL

(56) Entgegenhaltungen:
EP - A - 0 023 680
DE - A - 2 127 611
US - A - 4 123 559

(73) Patentinhaber: SKW Trostberg Aktiengesellschaft,
Dr.-Albert-Frank-Strasse 32 Postfach 1150/1160,
D-8223 Trostberg (DE)
Patentinhaber: Haarmann & Reimer GmbH,
Postfach 1253, D-3450 Holzminden (DE)

(72) Erfinder: Schütz, Erwin, Dr., Steiner Strasse 22,
D-8221 Palling (DE)
Erfinder: Vollbrecht, Heinz-Rüdiger, Dr.,
Herzog-Nikolaus-Strasse 15, D-8221 Stein/Traun (DE)
Erfinder: Sandner, Klaus, Gabelsbergerstrasse 1,
D-8223 Trostberg (DE)
Erfinder: Sand, Theodor, Dr., Vogelsang 3,
D-3450 Holzminden (DE)
Erfinder: Mühlnickel, Peter, Pipping 4 c,
D-3450 Holzminden (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft ein Verfahren zur Gewinnung der Aromastoffe der Vanillekapsel durch Extraktion mit Kohlendioxid bei überkritischen Bedingungen unter Bildung eines konzentrierten Extraktes, der sämtliche Aromastoffe der Vanillekapsel, die sich aus Vanillin, Vanillin säure und Duftstoffen zusammensetzt, enthält.

Die Vanille, d.h. die einem Fermentationsprozeß unterworfene Kapselfrucht einer tropischen Orchideenart enthält ein sehr liebliches, hocharomatisches Aroma, das nicht allein durch Vanillin gebildet wird, sondern auch Vanillinsäure und weitere Duftstoffe enthält. Da das Aroma des künstlichen Vanillins und auch die zur Verfügung stehenden Vanille-Extrakte nicht zu befriedigen vermögen, besteht ein erhebliches Bedürfnis nach Vanilleextrakten, die das konzentrierte Aroma der Vanillekapsel (unrichtig auch als Vanilleschote bezeichnet) enthalten. Nach bisher bekannten Verfahren wurden Extrakte aus Vanillekapseln mit organischen Lösungsmitteln hergestellt. Neben den erwünschten Aromastoffen werden dabei auch unerwünschte Ballaststoffe mit extrahiert, die zum Teil durch aufwendige Trenntechniken entfernt werden müssen.

In jüngerer Zeit ist ein Verfahren bekannt geworden, mit dem es gelingt, durch zweistufige Extraktion mit überkritischen Gasen, wie Kohlendioxid, Distickstoffoxid, Schwefelhexafluorid, Trifluormethan, Trifluorchlormethan, Difluormethan, Difluoräthylen, Perfluorpropan, Äthan oder Äthylen Gewürzextrakte mit natürlicher Zusammensetzung zu gewinnen (DE-PS 21 27 611). Der Nachteil dieses bekannten Verfahrens ist darin zu sehen, daß die Durchführung zwangsläufig in zwei Stufen erfolgen muß, um sowohl die Geruchs- als auch die Geschmacksstoffe zu erhalten. Die angegebenen langen Extraktionsdauern und hohen Drücke (400 bar, Beispiel 4) lassen das Verfahren unwirtschaftlich erscheinen.

In jüngster Zeit wurde ein weiteres zweistufiges Verfahren bekannt, das in der Weise arbeitet, daß in der ersten Verfahrensstufe Temperaturen unterhalb des kritischen Punktes der Extraktionsgase und oberhalb des kritischen Druckes und in der zweiten Stufe überkritische Drücke und Temperaturen angewandt werden. Auch diese Verfahrensweise erscheint aufwendig.

Die Aufgabe der vorliegenden Erfindung besteht somit darin, ein Verfahren zur Gewinnung der Aromastoffe der Vanillekapsel durch Extraktion mit Kohlendioxid unter fluiden Bedingungen anzugeben, das sämtliche Inhaltsstoffe der Vanillekapsel zu extrahieren erlaubt und die Gewinnung eines konzentrierten Aromas aus der Vanillekapsel auch mit einem einstufigen Verfahren in optimaler Weise ermöglicht.

Es hat sich nun überraschenderweise gezeigt, daß dies mit Hilfe einer Verfahrensweise der eingangs definierten Art gelingt, die dadurch gekennzeichnet ist, daß man die Extraktion bei Temperaturen zwischen 10 und 30°C und Drücken von 80 bis 350 bar durchführt und die Abscheidung des Extraktes bei Temperaturen von 0 bis 30°C und Drücken von 30 bis 60 bar bewirkt.

Gegenstand der Erfindung ist daher das Verfahren gemäß Hauptanspruch. Die Unteransprüche betreffen besonders bevorzugte Ausführungsformen dieses Erfindungsgegenstandes.

Gemäß einer bevorzugten Ausführungsform der Erfindung bewirkt man die Extraktion bei Drücken von 100 bis 160 bar und scheidet den gewonnenen Extrakt bei Temperaturen von 5 bis 20°C und Drücken von 35 bis 45 bar ab.

Es hat sich, namentlich-in bezug auf die Erzielung einer quantitativen Ausbeute als überraschend vorteilhaft erwiesen, das Extraktionsgut einer Vorbehandlung zu unterwerfen, um die zu gewinnenden Inhaltsstoffe der Vanillekapsel für den Zutritt des Extraktionsgases besser zugänglich zu machen. Gemäß einer bevorzugten Ausführungsform der Erfindung werden daher die Vanillekapseln bei einer tiefen-Temperatur von -50 bis -30°C, vorzugsweise von etwa -40°C vermahlen.

Überraschenderweise hat sich aber auch gezeigt, daß der gewünschte Aufschluß des Zellgewebes auch in einfacher Weise dadurch erreicht werden kann, daß man nach Beendigung einer Extraktion von lediglich grob zerkleinerten Vanillekapseln den Druck des Extraktionsbehälters zügig entspannt. Setzt man den in dieser Weise anfallenden Extraktionsrückstand einer weiteren Extraktion unter gleichen Bedingungen aus, so lassen sich ähnlich hohe Ausbeuten erzielen, wie bei der Extraktion des oben angesprochenen, bei tiefen Temperaturen vermahlenen Vanillekapselmaterials.

Einer weiteren bevorzugten Ausführungsform der Erfindung zufolge werden somit die lediglich grob zerkleinerten Vanillekapseln nach einem ersten Extraktionsschritt durch schnelle Druckentlastung aufgeschlossen und dann erneut bei Temperaturen zwischen 10 und 30°C und Drücken von 80 bis 350 bar, vorzugsweise 100 bis 160 bar extrahiert, worauf die Abscheidung des Extraktes in der beschriebenen Weise bewirkt wird.

Diese Verfahrensweise läßt sich mit besonderem Vorteil in mehreren hintereinander geschalteten Extraktionsbehältern durchführen, wenn man nach beendeter Extraktion eines Behälters das darin enthaltene komprimierte Gas in einen mit frischem Extraktionsgut beschickten Extraktionsbehälter abläßt, wodurch das in dem ersten Extraktionsbehälter enthaltene Extraktionsgut einer schnellen Druckentlastung unterworfen und aufgeschlossen wird, welches Material dann einer weiteren abschließenden Extraktion mit frischem Kohlendioxid zugeführt wird.

Mit Hilfe der beanspruchten Verfahrensweise erhält man einen Vanilleextrakt, der das konzentrierte Vanillearoma enthält und sich gegenüber den mit Alkohol gewonnenen herkömmlichen Vanilleextrakten als wesentlich aromatischer und kräftiger erweist und darüber hinaus noch zusätzliche leicht flüchtige Aromabestandteile enthält, die in dem herkömmlichen Alkoholextrakt der Vanillekapsel nicht enthalten sind.

Die folgenden Beispiele dienen der weiteren Erläuterung der Erfindung.

**Beispiel 1**

600 g Vanillekapseln werden tiefkalt bei -40°C fein vermahlen. Das Mahlgut wird im Extraktionsautoklaven während drei Stunden mit Kohlendioxid bei 160 bar und 25°C extrahiert. Die Abscheidung des Extraktes erfolgt bei 39 bar und 11°C. Die Ausbeute, bezogen auf Vanillin, beträgt 98,5%.

Die Qualitätsbeurteilung des in dieser Weise gewonnenen Vanilleextraktes erfolgte analytisch und sensorisch. Bei der sensorischen Prüfung wurden 100 kg eines Speiseeisgemisches mit 80 g eines in üblicher Weise mit Alkohol gewonnenen Vanilleextraktes aromatisiert. Der mit Alkohol gewonnene Vanilleextrakt wurde aus der gleichen Vanillekapsel-Partie gewonnen, wie der erfindungsgemäß durch Extraktion mit Kohlendioxid erhaltene. Dieses mit herkömmlichen Vanilleextrakt aromatisierte Speiseeisgemisch wurde gegen ein im entsprechenden Verhältnis mit dem erfindungsgemäß gewonnenen Vanilleextrakt aromatisierten Speiseeisgemisch verkostet. Hierbei wurden bei einem Panel-Test mit 14 Personen die mit dem erfindungs-gemäß gewonnenen Vanilleextrakt aromatisierten Eisproben einstimmig bevorzugt.

Die gaschromatische Analyse des in herkömmlicher Weise mit Alkohol gewonnenen Vanilleextraktes und des erfindungsge-mäß gewonnenen Extraktes lassen erkennen, daß die für das Vanillearoma relevanten Inhaltsstoffe der Vanillekapsel in dem erfindungsgemäß erhaltenen Extrakt in einer Menge von 120 bis 130% gegenüber den in üblicher Weise gewonnenen Alkoholextrakt enthalten sind. Besonders auffällig ist, daß einige leicht flüchtige Aromabestandteile nur in dem erfindungsgemäß erhaltenen Vanilleextrakt nachgewiesen werden können.

**Beispiel 2**

12 kg Vanillekapseln werden in einer Schneideinrichtung grob zerkleinert und in dieser Form in einem Extraktionsautoklaven 1,5 Stunden bei 160 bar und 27°C mit Kohlendioxid extrahiert.

Zwischenzeitlich wird der zweite Extraktionsautoklav mit der gleichen Menge grob zerkleiner ter Vanillekapseln gefüllt. Nach 1,5 Stunden wird das Gas aus dem ersten Extraktionsautoklaven in den zweiten Extraktionsautoklaven entspannt. Dabei blähen sich die in dem ersten Extraktionsautoklaven enthaltenen Vanillekapselteileauf, wodurch sich das Schüttvolumen deutlich erhöht (ca. 30%). Nun wird das Material in dem ersten Extraktionsautoklaven während weiterer 1,5 Stunden extrahiert, wobei das Extraktionsgas zunächst durch den ersten Extraktionsautoklaven und dann durch den zweiten Extraktionsautoklaven geführt wird. Nach beendeter Extraktion des Extraktionsgutes in dem ersten Extraktionsautoklaven wird dieser mit frischem Extraktionsgut beschickt und es wird mit dem Material in dem zweiten Extraktionsautoklaven so verfahren, wie es oben bezüglich des ersten Extraktionsautoklaven beschrieben ist. Die Abscheidung des Extraktes erfolgt bei 39 bar und 11°C. Die Ausbeute, bezogen auf Vanillin, beträgt 99%.

Die analytische und sensorische Qualitätsbeurteilung erfolgte in gleicher Weise und mit gleich gutem Ergebnis, wie in Beispiel 1 beschrieben.

**Patentansprüche**

1. Verfahren zur Gewinnung der Aromastoffe der Vanillekapsel durch Extraktion mit Kohlendioxid unter fluiden Bedingungen, dadurch gekennzeichnet, daß man die Extraktion bei Temperaturen zwischen 10 und 30°C und Drücken von 80 bis 350 bar durchführt und die Abscheidung des Extraktes bei Temperaturen von 0 bis 30°C und Drücken von 30 bis 60 bar bewirkt.

2. Verfahren nach Anspruch 1, dadurch gekennzeichnet, daß man die Extraktion bei Drücken von 100 bis 160 bar und die Abscheidung bei Temperaturen 5 bis 20°C und Drücken von 35 bis 45 bar bewirkt.

3. Verfahren nach den Ansprüchen 1 oder 2, dadurch gekennzeichnet, daß man die Vanillekapseln vor der Extraktion bei einer Temperatur von -50 bis -30°C vermahlt.

4. Verfahren nac-h den Ansprüchen 1 oder 2, dadurch gekennzeichnet, daß man lediglich grobzerkleinerte Vanillekapseln nach einem ersten Extraktionsschritt durch schnelle Druckentlastung aufschließt und dann erneut bei Temperaturen zwischen 10 und 30°C und Drücken von 80 bis 350 bar extrahiert.

5. Verfahren nach Anspruch 4, dadurch gekennzeichnet, daß man die Extraktion in mehreren hintereinander geschalteten Extraktionsbehältern durchführt und das bei der ersten Extraktion gewonnene, beladene komprimierte Gas in einen weiteren, mit frischen Vanillekapseln beschickten Extraktionsbehälter überführt, während das zurückbleibende, bereits vorextrahierte und aufgeschlossene Extraktionsgut erneut mit frischem Kohlendioxid extrahiert wird.

**Revendications**

1. Procédé pour l'obtention des substances aromatiques de la capsule de vanille par extraction à l'anhydride carbonique en phase fluide. caractérisé en ce que l'on procede à l'extraction à des températures de 10 à 30°C et des pressions de 80 à 350 bar et on sépare l'extrait à des températures de 0 à 30°C et des pressions de 30 à 60 bar.

2. Procédé selon la revendication 1, caractérisé en ce que l'on procède à l'extraction à des pressions de 100 à 160 bar et on sépare à des températures de 5 à 20°C et des pressions de 35 à 45 bar.

3. Procédé selon les revendications 1 ou 2, caractérisé en ce que. avant l'extraction. on broie les capsules de vanille à une température de -50 à -30°C.

4. Procédé selon les revendications 1 ou 2, caractérisé en ce que l'on soumet les capsules de vanille broyées grossièrement à une première opération d'extraction, on les désagrège sous l'action d'une rapide détente de pression et on les extrait à nouveau à des températures de 10 a 30°C et des pressions de 80 à 350 bar.

5. Procédé selon la revendication 4. caractérisé en ce que l'on procède à l'extraction dans plusieurs récipients d'extraction disposés en série et on transfère le gaz comprimé et chargé obtenu à la première extraction dans un autre récipient d'extraction garni de capsules de vanille fraîches. puis on extrait à nouveau par de l'anhydride carbonique frais la matière résiduelle. soumise à l'extraction préalable et désagrégée.

**Claims**

1. Process for obtaining the aroma materials of vanilla pods by extraction with carbon dioxide under liquid conditions, characterised in that one carries out the extraction at temperatures between 10 and 30°C and pressures of 80 to 350 bar and brings about the separation of the extract at temperatures of 0 to 30°C. and pressures of 30 to 60 bar.

2. Process according to claim 1, characterised in that one brings about the extraction at pressures of 100 to 600 bar and the separation at temperatures of 5 to 20°C. and pressures of 35 to 45 bar.

3. Process according to claim 1 or 2, characterised in that one grinds the vanilla pods before extraction at a temperature of -50 to -30°C.

4. Process according to claim 1 or 2, characterised in that one only digests coarsely comminuted vanilla pods after a first extraction step by rapid pressure release and then again extracts at temperatures between 10 and 30°C. and pressures of 80 to 350 bar.

5. Process according to claim 4, characterised in that one carries out the extraction in several successively connected extraction containers and passes the loaded compressed gas obtained in the first extraction into a further extraction container supplied with fresh vanilla pods, while the already pre-extracted and digested extraction material remaining behind is again extracted with fresh carbon dioxide.